# EUROPEAN PATENT APPLICATION

(11) **EP 4 545 951 A1**
(43) Date of publication of application: **30.04.2025**
(21) Application number: 23826762.9
(22) Date of filing: 31.03.2023
(51) Int. Cl.: G01N 23/18, G01N 23/044

(54) **DISPLAY CONTROL DEVICE, DISPLAY CONTROL METHOD, AND DISPLAY CONTROL PROGRAM**

(30) Priority: 24.06.2022 JP 2022101831
(71) Applicant: FUJIFILM Corporation, Tokyo 106-8620 (JP)
(72) Inventor: INAGI, Seiya, Tokyo 106-8620 (JP); IKEDA, Haruka, Tokyo 106-8620 (JP); HAYASHI, Shinji, Tokyo 106-8620 (JP)
(74) Representative: Meissner Bolte Partnerschaft mbB
(86) International application number: PCT/JP2023/013732
(87) International publication number: WO 2023/248573

(57) **Abstract**

**In** a case in which a display control device performs display control based on multiple inspection images captured by radiating radiation onto an inspection target from multiple different image capturing directions and structure information indicating a three-dimensional structure of the inspection target, the display control device performs the display control based on association information in which a viewpoint direction when the display control is performed based on the structure information and the image capturing direction of each of the multiple inspection images are associated with each other.

## Description

### BACKGROUND OF THE INVENTION

### 1. Field of the Invention

The present disclosure relates to display control devices, display control methods, and display control programs.

### 2. Description of the Related Art

JP2021-135153A discloses a technique for creating three-dimensional data of an inspection target by using information about multiple X-ray images obtained by photographing the inspection target. This technique involves using the three-dimensional data of the inspection target to create and display a user confirmation image indicating the shape of an inspection target area in the inspection target as a two-dimensional shape of a desired observation target surface.

### SUMMARY OF THE INVENTION

In a non-destructive inspection, it is preferable that information about a discontinuity in a two-dimensional inspection image captured by irradiating the inspection target with radiation can be associated with the location of the discontinuity in a three-dimensional structure of the inspection target. This is because the inspection efficiency can be enhanced by collectively referring to information about the shape and texture of the discontinuity in the two-dimensional inspection image and the location of the discontinuity in the three-dimensional structure of the inspection target.

The present disclosure has been made in view of the above circumstances, and an object thereof is to provide a display control device, a display control method, and a display control program that enable enhanced inspection efficiency in a non-destructive inspection.

A display control device according to a first aspect includes at least one processor and performs display control based on a plurality of inspection images captured by radiating radiation onto an inspection target from a plurality of different image capturing directions and structure information indicating a three-dimensional structure of the inspection target. The processor performs the display control based on association information in which a viewpoint direction when the display control is performed based on the structure information and the image capturing direction of each of the plurality of inspection images are associated with each other.

According to the display control device according to a second aspect, in the display control device according to the first aspect, the processor performs control for displaying at least one of the inspection images and a virtual inspection target based on the association information. The virtual inspection target is based on the structure information.

According to the display control device according to a third aspect, in the display control device according to the second aspect, the processor changes a display mode of the at least one of the plurality of inspection images based on the association information.

According to the display control device according to a fourth aspect, in the display control device according to the third aspect, the processor changes the display mode of the inspection image based on the viewpoint direction.

According to the display control device according to a fifth aspect, in the display control device according to the fourth aspect, the processor selects one inspection image from the plurality of inspection images based on an angle formed between the viewpoint direction and the image capturing direction, and changes the display mode of the selected inspection image.

According to the display control device according to a sixth aspect, in the display control device according to the fourth aspect, the processor selects one inspection image from the plurality of inspection images based on a similarity between a two-dimensional image and the inspection image, and changes the display mode of the selected inspection image. The two-dimensional image is obtained by projecting the structure information in the viewpoint direction.

According to the display control device according to a seventh aspect, in the display control device according to the fifth or sixth aspect, the processor performs control for highlighting the selected inspection image.

According to the display control device according to an eighth aspect, in the display control device according to the fifth or sixth aspect, the processor changes a display position of the selected inspection image.

According to the display control device according to a ninth aspect, in the display control device according to the fifth or sixth aspect, the processor performs control for displaying only the selected inspection image of the plurality of inspection images.

According to the display control device according to a tenth aspect, in the display control device according to the fourth aspect, when the processor performs control for displaying the plurality of inspection images, the processor disposes each inspection image at a position according to an angle formed between the viewpoint direction and the image capturing direction of the inspection image.

According to the display control device according to an eleventh aspect, in the display control device according to the fourth aspect, when the processor performs control for displaying the plurality of inspection images, the processor disposes the inspection images in an order according to attribute information of each inspection image.

According to the display control device according to a twelfth aspect, in the display control device according to the fourth aspect, when the processor performs control for displaying the plurality of inspection images, the processor disposes the inspection images in an order according to an angle formed between the viewpoint direction and the image capturing direction of each inspection image or in an order according to a similarity between a two-dimensional image and each inspection image. The two-dimensional image is obtained by projecting the structure information in the viewpoint direction.

According to the display control device according to a thirteenth aspect, in the display control device according to any one of the second to twelfth aspects, the processor changes a display mode of the virtual inspection target based on the image capturing direction according to a position selected within a display region of the plurality of inspection images.

According to the display control device according to a fourteenth aspect, in the display control device according to the thirteenth aspect, the processor changes the viewpoint direction to a direction identical to the image capturing direction of a selected one of the inspection images.

According to the display control device according to a fifteenth aspect, in the display control device according to the thirteenth aspect, in accordance with an operation for moving a selected one of the inspection images, the processor changes the viewpoint direction to a direction identical or opposite to the operation for moving the selected inspection image.

According to the display control device according to a sixteenth aspect, in the display control device according to the thirteenth aspect, if the selected position is a position between the plurality of inspection images, the processor changes the viewpoint direction such that a relative positional relationship between the selected position and the inspection images disposed in a vicinity of the selected position becomes closer to a relative positional relationship between the viewpoint direction and the inspection images disposed in the vicinity.

According to the display control device according to a seventeenth aspect, in the display control device according to any one of the second to sixteenth aspects, the processor performs control for displaying information indicating a correspondence relationship between the structure information and the plurality of inspection images in combination with at least either the virtual inspection target or the inspection images based on the association information.

According to the display control device according to an eighteenth aspect, in the display control device according to the seventeenth aspect, the processor performs control for displaying an object indicating that any of the inspection images is present in a vicinity of the virtual inspection target and in a direction corresponding to the image capturing direction of the inspection image.

According to the display control device according to a nineteenth aspect, in the display control device according to the eighteenth aspect, the processor performs control for highlighting an object indicating that a selected one of the inspection images is present.

According to the display control device according to a twentieth aspect, in the display control device according to the seventeenth aspect, the processor performs control for displaying a selected one of the inspection images in combination with a lattice-like auxiliary line and performs control for displaying the virtual inspection target in combination with a lattice-like auxiliary line having a same pitch as the auxiliary line in a plane orthogonal to a direction corresponding to the image capturing direction of the selected inspection image.

According to the display control device according to a twenty-first aspect, in the display control device according to the seventeenth aspect, the processor performs control for displaying a feature point in combination with a selected one of the inspection images and the virtual inspection target. The feature point corresponds to where the inspection image and the virtual inspection target correspond with each other.

According to the display control device according to a twenty-second aspect, in the display control device according to the seventeenth aspect, the processor performs control for displaying an object indicating a discontinuity in combination with a location thereof on the virtual inspection target corresponding to the location of the discontinuity on a selected one of the inspection images.

According to the display control device according to a twenty-third aspect, in the display control device according to any one of the second to twenty-second aspects, positional information about a discontinuity appearing in any of the inspection images and positional information about the discontinuity in the structure information are associated with each other. The processor changes at least one of a display mode of the virtual inspection target or a display mode of the inspection image based on the positional information about the discontinuity selected in the inspection image or the structure information.

According to the display control device according to a twenty-fourth aspect, in the display control device according to the twenty-third aspect, the processor changes the display mode of the inspection image based on a distance between a location of the discontinuity selected from a plurality of discontinuities and a location of a discontinuity other than the selected discontinuity.

According to the display control device according to a twenty-fifth aspect, in the display control device according to the twenty-third aspect, the processor changes the display mode of the inspection image based on a ratio between an average value of pixel values in a region of the selected discontinuity and an average value of pixel values in a region surrounding the region of the discontinuity.

According to the display control device according to a twenty-sixth aspect, in the display control device according to the twenty-third aspect, the processor changes the display mode of the inspection image based on a degree of smoothness of pixel values in a region surrounding the selected discontinuity.

According to the display control device according to a twenty-seventh aspect, in the display control device according to the twenty-third aspect, the processor changes the viewpoint direction such that the selected discontinuity is located at a center and at a front side of a screen.

According to the display control device according to a twenty-eighth aspect, in the display control device according to the twenty third aspect, the processor changes the viewpoint direction such that the inspection target has a smallest thickness in the viewpoint direction at a location of the selected discontinuity.

A display control method according to a twenty-ninth aspect is executed by at least one processor of a display control device. The display control device includes the processor and performs display control based on a plurality of inspection images captured by radiating radiation onto an inspection target from a plurality of different image capturing directions and structure information indicating a three-dimensional structure of the inspection target. The display control method includes performing the display control based on association information in which a viewpoint direction when the display control is performed based on the structure information and the image capturing direction of each of the plurality of inspection images are associated with each other.

A display control program according to a thirtieth aspect is executed by at least one processor of a display control device. The display control device includes the processor and performs display control based on a plurality of inspection images captured by radiating radiation onto an inspection target from a plurality of different image capturing directions and structure information indicating a three-dimensional structure of the inspection target. The display control program includes performing the display control based on association information in which a viewpoint direction when the display control is performed based on the structure information and the image capturing direction of each of the plurality of inspection images are associated with each other.

The present disclosure enables enhanced inspection efficiency in a non-destructive inspection.

### BRIEF DESCRIPTION OF THE DRAWINGS

Fig. 1 is a block diagram illustrating a schematic configuration of a radiological image capturing apparatus;
Fig. 2 is a block diagram illustrating an example of a hardware configuration of a display control device;
Fig. 3 illustrates structure information;
Fig. 4 illustrates an example of inspection image information;
Fig. 5 illustrates an example of discontinuity location information;
Fig. 6 is a block diagram illustrating an example of a functional configuration of the display control device;
Fig. 7 illustrates an example of a display screen;
Fig. 8 illustrates an example of the display screen;
Fig. 9 illustrates an example of the display screen;
Fig. 10 illustrates an example of the display screen;
Fig. 11 illustrates an example of the display screen;
Fig. 12 illustrates an example of the display screen;
Fig. 13 illustrates an example of the display screen;
Fig. 14 is a flowchart illustrating an example of a display control process;
Fig. 15 illustrates an example of the display screen;
Fig. 16 illustrates an example of the display screen;
Fig. 17 illustrates an example of the display screen;
Fig. 18 illustrates an example of the display screen;
Fig. 19 illustrates an example of the display screen; and
Fig. 20 illustrates an example of the display screen.

### DESCRIPTION OF THE PREFERRED EMBODIMENTS

An embodiment for implementing the technology of the present disclosure will be described in detail below with reference to the drawings.

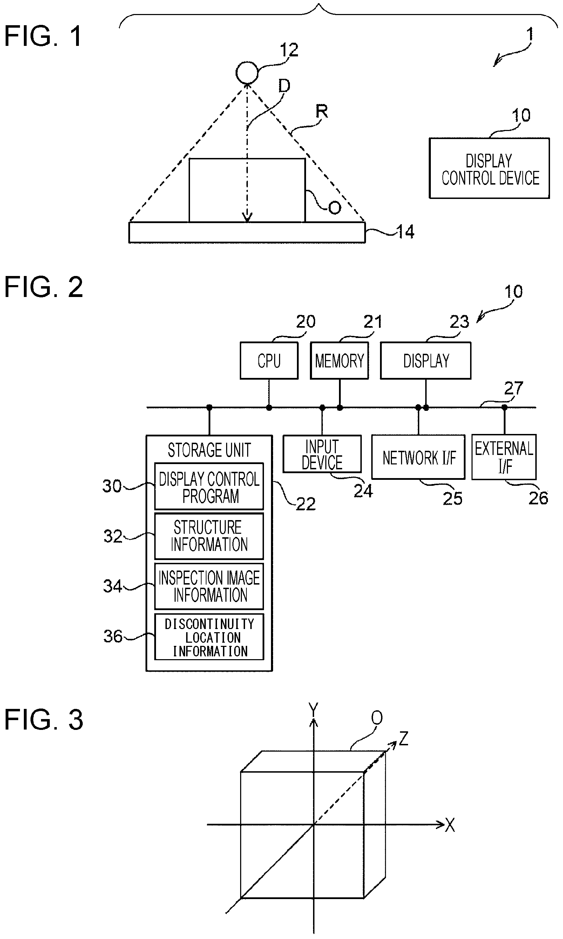

First, the configuration of a radiological image capturing apparatus 1 according to this embodiment will be described. The radiological image capturing apparatus 1 is used in a non-destructive inspection of an inspection target. As shown in Fig. 1, the radiological image capturing apparatus 1 includes a display control device 10, a radiation source 12, and a radiation detector 14. The display control device 10, the radiation source 12, and the radiation detector 14 are connected to one another in a communicable manner. The display control device 10 is, for example, a computer, such as a personal computer or a server computer.

The radiation source 12 radiates radiation R, such as an X ray, onto an inspection target O. The radiation source 12 according to this embodiment radiates cone-beam-like radiation R. A direction from the radiation source 12 to a spot on the radiation detector 14 reached by the radiation R transmitted through the inspection target O will be referred to as "image capturing direction D". This embodiment relates to an example where the direction from the radiation source 12 to the spot on the radiation detector 14 reached by the radiation R transmitted through the center of the inspection target O is defined as the image capturing direction D.

The radiation detector 14 includes a thin film transistor (TFT) substrate and a scintillator as an example of a light emitting layer that emits light by being irradiated with the radiation R. The scintillator and the TFT substrate are laminated in the irradiation direction of the radiation R, that is, the image capturing direction D. The TFT substrate includes multiple two-dimensionally arranged pixels. Each pixel includes a field-effect thin-film transistor and a sensor unit as an example of a conversion element that increases electric charge occurring as the amount of radiation radiated increases. The sensor unit generates electric charge by absorbing light emitted by the scintillator, and accumulates the generated electric charge. The field-effect thin-film transistor converts the electric charge accumulated in the sensor unit into an electric signal and outputs the electric signal. According to the above configuration, the radiation detector 14 generates a two-dimensional radiological image according to the amount of radiation R radiated onto the inspection target O from the radiation source 12 and transmitted through the inspection target O, and outputs the generated radiological image to the display control device 10.

Accordingly, in the radiological image capturing apparatus 1, the radiological image captured as a result of radiating the radiation R onto the inspection target O from the radiation source 12 is stored in the display control device 10. The radiological image captured as a result of radiating the radiation R onto the inspection target O will be referred to as "inspection image" hereinafter.

Next, a hardware configuration of the display control device 10 according to this embodiment will be described with reference to Fig. 2. As shown in Fig. 2, the display control device 10 includes a central processing unit (CPU) 20, a memory 21 as a temporary storage area, and a nonvolatile storage unit 22. The display control device 10 also includes a display 23, such as a liquid crystal display, an input device 24, such as a keyboard and a mouse, and a network interface (I/F) 25 connected to a network. The display control device 10 further includes an external I/F 26 connected to the radiation source 12 and the radiation detector 14. The CPU 20, the memory 21, the storage unit 22, the display 23, the input device 24, the network I/F 25, and the external I/F 26 are connected to a bus 27. The CPU 20 is an example of a processor according to the disclosed technology.

The storage unit 22 is realized by, for example, a hard disk drive (HDD), a solid state drive (SSD), or a flash memory. The storage unit 22 as a storage medium has a display control program 30 stored therein. The CPU 20 reads out the display control program 30 from the storage unit 22, loads the display control program 30 into the memory 21, and executes the loaded display control program 30.

The storage unit 22 has structure information 32, inspection image information 34, and discontinuity location information 36 stored therein. The structure information 32 includes information indicating the three-dimensional structure of the inspection target O. As shown in Fig. 3 as an example, the structure information 32 according to this embodiment is used when a virtual inspection target O is displayed on the display 23, and expresses the three-dimensional structure of the inspection target O by using coordinates of an orthogonal coordinate system having three axes, namely, an X-axis, a Y-axis, and a Z-axis. The structure information 32 also includes materials of components constituting the inspection target O. In accordance with the material of each component, the transmittance of the radiation R through the component is determined. An example of the structure information 32 is design information, such as computer-aided design (CAD) data.

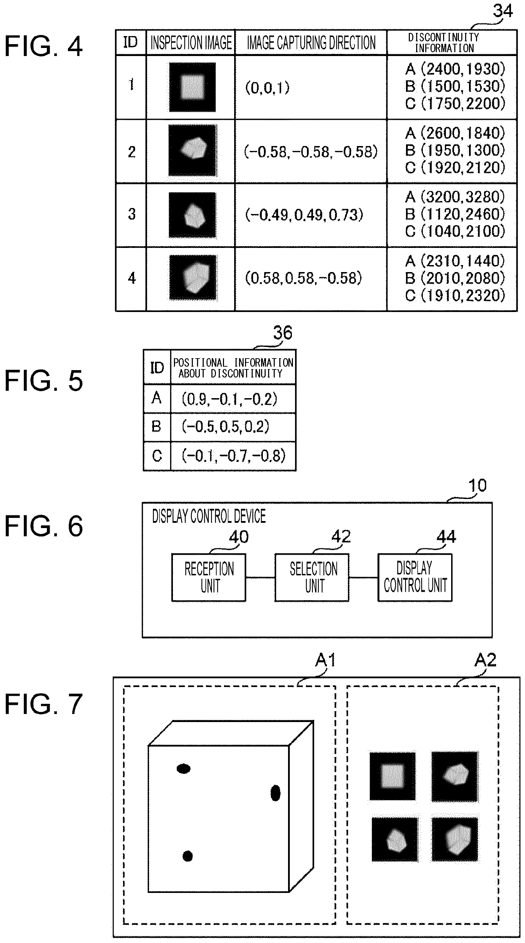

As shown in Fig. 4 as an example, the inspection image information 34 includes multiple inspection images captured as a result of radiating the radiation R onto the inspection target O from multiple different image capturing directions D. Fig. 4 illustrates an example where there are four image capturing directions D, that is, there are four inspection images. The number of image capturing directions D and whichever one of the image capturing directions D is to be selected are set by a user in accordance with, for example, the shape and material of the inspection target O.

As shown in Fig. 4, the inspection image information 34 includes an ID associated with each inspection image and used for identifying the inspection image, the image capturing direction D when the inspection image is captured, and information related to a discontinuity in the inspection target O detected from the inspection image. The image capturing direction D included in the inspection image information 34 is converted into the coordinates of the orthogonal coordinate system of the structure information 32. A direction extending through an origin point (0, 0, 0) from the coordinates of the image capturing direction D included in the inspection image information 34 is the image capturing direction D when the inspection image is captured.

The discontinuity-related information included in the inspection image information 34 includes an ID for identifying the discontinuity detected from the inspection image and positional information about the discontinuity in the inspection image. The example in Fig. 4 illustrates that three discontinuities have been detected and that the IDs of the discontinuities are "A", "B", and "C", respectively. In this embodiment, the positional information about the discontinuity in the inspection image is expressed with coordinates of an orthogonal coordinate system having a specific point (e.g., a point at the upper left corner) of a two-dimensional inspection image as an origin point and having two axes, namely, an X-axis and a Y-axis. The term "discontinuity" in this description is defined as a term in a non-destructive inspection and refers to a discontinuous section, such as an air bubble, a foreign object, and a crack.

As shown in Fig. 5 as an example, the discontinuity location information 36 includes an ID for identifying each discontinuity and positional information about the discontinuity. The ID included in the discontinuity location information 36 is the same as the ID included in the discontinuity-related information in the inspection image information 34. The positional information about the discontinuity included in the discontinuity location information 36 is obtained by converting the positional information about the discontinuity in the inspection image included in the inspection image information 34 into the coordinates of the orthogonal coordinate system of the structure information 32. Specifically, the positional information about the discontinuity included in the inspection image information 34 serving as the positional information about the discontinuity appearing in the inspection image and the positional information about the discontinuity in the structure information 32 are associated with each other by using the ID for identifying the discontinuity.

Next, a functional configuration of the display control device 10 according to this embodiment will be described with reference to Fig. 6. As shown in Fig. 6, the display control device 10 includes a reception unit 40, a selection unit 42, and a display control unit 44. The CPU 20 executes the display control program 30 so as to function as the reception unit 40, the selection unit 42, and the display control unit 44.

The reception unit 40 receives an operation performed by the user on a screen displayed on the display 23 by being controlled by the display control unit 44, to be described later. For example, the user performs an operation for selecting one of multiple inspection images displayed on the display 23, an operation for rotating a virtual inspection target O displayed on the display 23, and an operation for selecting a discontinuity displayed on the display 23.

The selection unit 42 selects one inspection image from the multiple inspection images based on an angle formed between the viewpoint direction when the display control unit 44 performs display control based on the structure information 32 and the image capturing direction D of the inspection image. The viewpoint direction is the direction of a display screen as viewed from the virtual inspection target O on the display screen of the virtual inspection target O. For example, the viewpoint direction is expressed using the coordinates of the orthogonal coordinate system of the structure information 32. Specifically, the viewpoint direction and the image capturing direction D included in the inspection image information 34 are associated with each other in accordance with the coordinates of the same orthogonal coordinate system.

When the direction extending toward the origin point is viewed from the coordinates expressing the viewpoint direction, the virtual inspection target O directly faces the display screen. Specifically, for example, when the user performs the operation for rotating the inspection target O displayed on the display 23, the viewpoint direction is changed. When the viewpoint direction is changed, the orientation of the virtual inspection target O is changed such that a plane directly facing the viewpoint direction directly faces the display screen.

In detail, the selection unit 42 calculates an angle formed between the viewpoint direction and the image capturing direction D of each inspection image based on the inspection image information 34, and selects the inspection image with the smallest calculated angle.

The selection unit 42 may calculate a similarity between a two-dimensional image obtained by projecting the structure information 32 in the viewpoint direction and each inspection image. In this case, the selection unit 42 selects one inspection image from the multiple inspection images based on the calculated similarity. In detail, the selection unit 42 selects the inspection image with the highest calculated similarity.

As shown in Fig. 7, based on the structure information 32 and the inspection image information 34, the display control unit 44 performs control for displaying the virtual inspection target O and the multiple inspection images on the display 23. As shown in Fig. 7, a screen displayed in accordance with the display control by the display control unit 44 includes a first display region A1 displaying the virtual inspection target O and a second display region A2 displaying the multiple inspection images. As an alternative to the example in Fig. 7 in which the multiple inspection images are arranged and displayed in a tile-like fashion, the multiple inspection images may be arranged and displayed in line in the vertical direction or the horizontal direction of the screen.

As shown in Fig. 7, the display control unit 44 further performs control for displaying discontinuity-indicating objects on the virtual inspection target O based on the discontinuity location information 36. In the example in Fig. 7, discontinuities are expressed with black circular dots. Each discontinuity-indicating object is not particularly limited and may be, for example, a predetermined mark or an icon. Furthermore, for example, each discontinuity-indicating object may be an image of a discontinuity area in an inspection image. Moreover, for example, the color of each discontinuity-indicating object may be varied from discontinuity to discontinuity.

When the reception unit 40 receives the operation for rotating the virtual inspection target O, the display control unit 44 changes the viewpoint direction in accordance with the amount of rotation in the operation, thereby rotating the virtual inspection target O. In this case, the display control unit 44 changes the display mode of an inspection image based on the changed viewpoint direction. In detail, the display control unit 44 changes the display mode of the inspection image selected by the selection unit 42 based on the changed viewpoint direction.

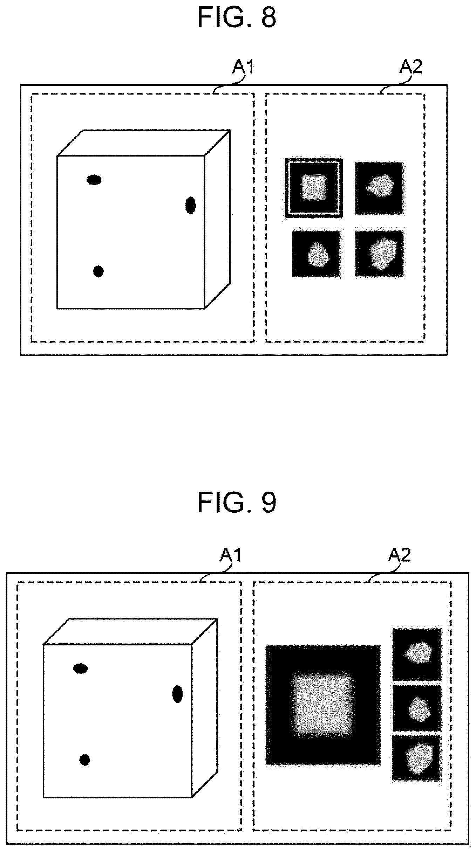

As shown in Fig. 8 as an example, the display control unit 44 renders the contour of the inspection image selected by the selection unit 42 by using a preset color, such as red, thereby performing control for highlighting the inspection image selected by the selection unit 42. Fig. 8 illustrates an example where the inspection image disposed at the upper left side is selected by the selection unit 42.

As shown in Fig. 9, the display control unit 44 may perform control for displaying the inspection image selected by the selection unit 42 in a larger size than the other inspection images, so as to perform the control for highlighting the inspection image selected by the selection unit 42.

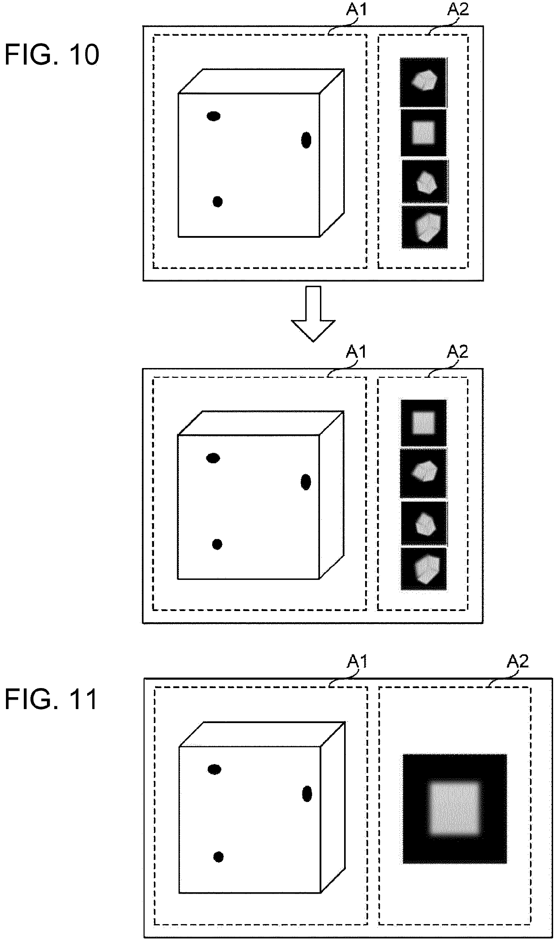

As shown in Fig. 10, the display control unit 44 may change the display position of the inspection image selected by the selection unit 42. The example in Fig. 10 illustrates a state where the multiple inspection images are arranged in the vertical direction in the display region A2 and the display position of the inspection image selected by the selection unit 42 is changed to the top position.

As shown in Fig. 11, the display control unit 44 may perform control for displaying only the inspection image selected by the selection unit 42 among the multiple inspection images. In this case, the display control unit 44 switches one inspection image to be displayed in the display region A2 in accordance with an operation, such as a scrolling operation, performed by the user for switching the displayed inspection image.

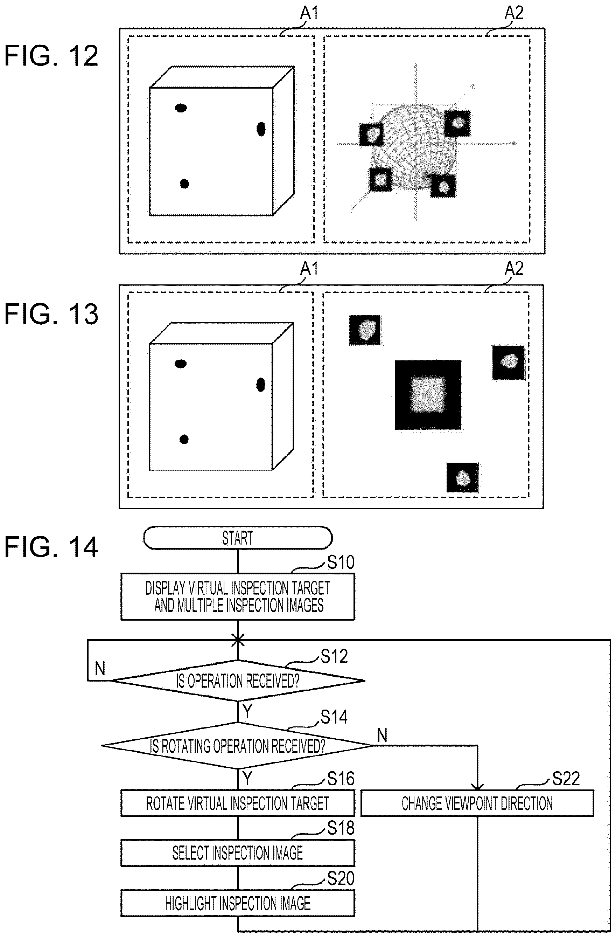

As shown in Fig. 12, when performing the control for displaying the multiple inspection images, the display control unit 44 may dispose each inspection image at a position according to an angle formed between the viewpoint direction and the image capturing direction D of the inspection image. **In** this case, the user can readily ascertain the image capturing direction D when each inspection image is captured. **In** the example in Fig. 12, each inspection image is disposed on a sphere so that the user can more readily ascertain the image capturing direction D when the inspection image is captured.

As shown in Fig. 13, when each inspection image is to be disposed at the position according to the angle formed between the viewpoint direction and the image capturing direction D of the inspection image, the display control unit 44 may dispose the inspection angle with the smallest angle formed between the viewpoint direction and the image capturing direction D at the center of the display region A2. In this case, with regard to an inspection image other than the inspection image disposed at the center of the display region A2, the display control unit 44 disposes the inspection image in accordance with an angle formed between the image capturing direction D of that inspection image and the image capturing direction D of the inspection image disposed at the center of the display region A2. In the example in Fig. 13, the display control unit 44 performs control for displaying the inspection image disposed at the center of the display region A2 with a larger size than the other inspection images.

When performing the control for displaying the multiple inspection images, the display control unit 44 may dispose the inspection images in the order according to attribute information of each inspection image. For example, in the display region A2 on the display screen shown in Fig. 10, the display control unit 44 disposes the inspection images sequentially from the top, starting with the inspection image captured most recently to the display time point. In this case, the attribute information is not limited to the image-captured time and may be, for example, the photographer or the inspector.

When performing the control for displaying the multiple inspection images, the display control unit 44 may dispose the inspection images in the order according to the angle formed between the viewpoint direction and the image capturing direction D of each inspection image. For example, in the display region A2 on the display screen shown in Fig. 10, the display control unit 44 disposes the inspection images sequentially from the top, starting with the inspection image with the largest angle formed between the viewpoint direction and the image capturing direction D of the inspection image.

When performing the control for displaying the multiple inspection images, the display control unit 44 may dispose the inspection images in the order according to a similarity between a two-dimensional image obtained by projecting the structure information 32 in the viewpoint direction and each inspection image. For example, in the display region A2 on the display screen shown in Fig. 10, the inspection images are disposed sequentially from the top, starting with the inspection image with the highest similarity with the two-dimensional image obtained by projecting the structure information 32 in the viewpoint direction.

When the reception unit 40 receives the operation for selecting a position within the display region A2 of multiple images, the display control unit 44 changes the display mode of the virtual inspection target O based on the image capturing direction D according to the position selected within the display region A2. In this case, examples of the operation include an operation for selecting an inspection image itself and an operation for selecting a position between the inspection images.

In detail, the display control unit 44 changes the viewpoint direction to a direction identical to the image capturing direction D of the selected inspection image. In this case, the virtual inspection target O is displayed in the display region A1 in a state where the plane in which the virtual inspection target O is viewed from the image capturing direction D directly faces the display screen.

In the example in Fig. 12 or Fig. 13, in accordance with an operation for moving the selected inspection image, the display control unit 44 may change the viewpoint direction to a direction identical or opposite to the operation for moving the inspection image. In this case, the virtual inspection target O rotates in accordance with the operation for moving the inspection image. The display control unit 44 may synchronize the speed for moving the inspection image with the moving speed of the viewpoint direction.

In the example in Fig. 12 or Fig. 13, if the selected position is a position between multiple inspection images, the display control unit 44 may change the viewpoint direction such that the relative positional relationship between the selected position and the inspection images disposed in the vicinity of the selected position becomes closer to the relative positional relationship between the viewpoint direction and the inspection images disposed in the vicinity. In this case, the virtual inspection target O is displayed in the display region A1 in a state where the plane of the virtual inspection target O according to the selected position directly faces the display screen.

Next, the operation of the display control device 10 according to this embodiment will be described with reference to Fig. 14. The CPU 20 executes the display control program 30, whereby a display control process shown in Fig. 14 is executed. The display control process shown in Fig .14 is executed when, for example, the user inputs an execution start command.

In step S10 in Fig. 14, the display control unit 44 performs control for displaying the virtual inspection target O and the multiple inspection images on the display 23 based on the structure information 32 and the inspection image information 34. Moreover, the display control unit 44 performs control for displaying each discontinuity-indicating object on the virtual inspection target O based on the discontinuity location information 36. The viewpoint direction when the virtual inspection target O is displayed on an initial display screen in step S10 may be the viewpoint direction of an initially set value or may be inherited from the viewpoint direction corresponding to previous display of the virtual inspection target O. The display mode of the multiple inspection images may accord with an initially set value or may be inherited from the display mode corresponding to previous display of the multiple inspection images.

In step S12, the reception unit 40 waits until receiving an operation performed by the user on the screen displayed in accordance with previously-executed control in step S10, step S20, or step S22. When the reception unit 40 receives the operation performed by the user, a positive determination result is obtained in the determination in step S12, and the process proceeds to step S14.

In step S14, the reception unit 40 determines whether or not the operation received in step S12 is the operation for rotating the virtual inspection target O. When a positive determination result is obtained in this determination, the process proceeds to step S16.

In step S16, the display control unit 44 changes the viewpoint direction in accordance with the amount of rotation in the operation received in step S12, so as to rotate the virtual inspection target O. In step S18, the selection unit 42 selects one inspection image from the multiple inspection images based on the angle formed between the viewpoint direction changed in step S16 and the image capturing direction D of each inspection image, as mentioned above. In step S20, the display control unit 44 performs control for highlighting the inspection image selected in step S18, as mentioned above. When step S20 is completed, the process returns to step S12.

On the other hand, if the operation received in step S12 is the operation for selecting a position within the display region A2 of multiple images, a positive determination result is obtained in the determination in step S14, and the process proceeds to step S22. In step S22, the display control unit 44 changes the viewpoint direction to a direction identical to the image capturing direction D of the inspection image selected in accordance with the operation received in step S12, as mentioned above. When step S22 is completed, the process returns to step S12. When the user inputs a screen display termination command, the display control process ends.

As described above, in this embodiment, information about a discontinuity in a two-dimensional inspection image and the location of the discontinuity in the three-dimensional structure of the inspection target O are associated with each other, and the display of the two-dimensional inspection image and the display of the three-dimensional virtual inspection target O coordinate with each other. Accordingly, the inspection efficiency in a non-destructive inspection can be enhanced.

In the above embodiment, the display control unit 44 may perform control for displaying information indicating the correspondence relationship between the structure information 32 and the multiple inspection images in combination with at least either the virtual inspection target O or the inspection images based on the structure information 32 and the inspection image information 34.

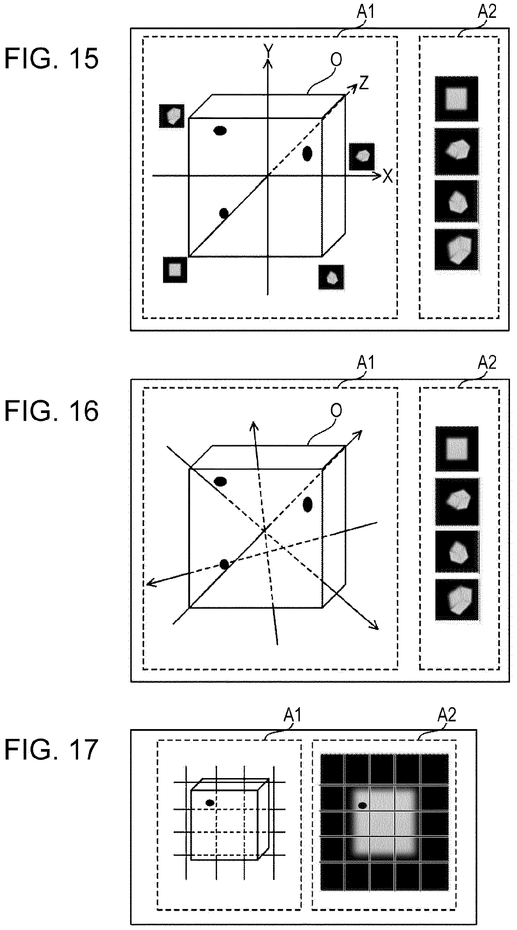

In detail, as shown in Fig. 15 as an example, the display control unit 44 may perform control for displaying, on the display 23, a combination of objects indicating that inspection images are present in the vicinity of the virtual inspection target O and in directions corresponding to the image capturing directions D of the respective inspection images. Fig. 15 illustrates an example where thumbnail images of inspection images are applied as the objects indicating that the inspection images are present. In this case, as shown in Fig. 16, arrows indicating the image capturing directions D of the inspection images may be applied as the objects indicating that the inspection images are present. In this case, for example, marks or icons indicating the inspection images may alternatively be applied as the objects indicating that the inspection images are present. In this case, when the user selects one of the inspection images in the display region A2, the display control unit 44 may perform control for highlighting the object indicating that the inspection image is present.

As shown in Fig. 17, the display control unit 44 may perform control for displaying the selected inspection image in combination with lattice-like auxiliary lines, and may perform control for displaying the virtual inspection target O in combination with lattice-like auxiliary lines having the same pitch as the aforementioned auxiliary lines in a plane orthogonal to the direction corresponding to the image capturing direction D of the selected inspection image.

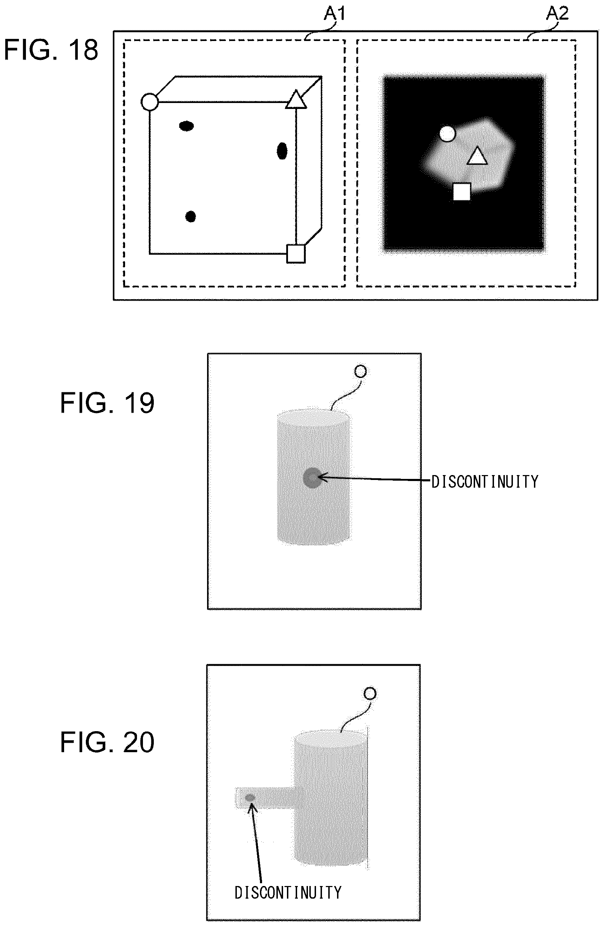

As shown in Fig. 18, the display control unit 44 may perform control for displaying feature points where the selected inspection image and the virtual inspection target O correspond with each other in combination with the inspection image and the virtual inspection target O. In Fig. 18, the feature points where the inspection image and the virtual inspection target O correspond with each other are indicated with circular, triangular, and rectangular marks.

The display control unit 44 may perform control for displaying an object indicating a discontinuity in combination with the location thereof on the virtual inspection target O corresponding to the location of the discontinuity on the selected inspection image.

In the above embodiment, when the reception unit 40 receives an operation for selecting the discontinuity in the inspection image or the object indicating the discontinuity in the virtual inspection target O, the display control unit 44 may change at least one of the display mode of the virtual inspection target O or the display mode of the inspection image based on the positional information about the selected discontinuity.

In detail, the selection unit 42 first selects one inspection image from the multiple inspection images based on the distance between the location of a discontinuity selected by the user from multiple discontinuities and the location of a discontinuity other than the selected discontinuity. In more detail, the selection unit 42 selects one inspection image with the longest aforementioned distance. The display control unit 44 performs control for highlighting the inspection image selected by the selection unit 42. Accordingly, the user can readily refer to the inspection image with the relatively large distance between the two discontinuities, that is, the inspection image in which the statuses of the discontinuities are viewable relatively easily.

In this case, the selection unit 42 may select one inspection image from the multiple inspection images based on a ratio between an average value of pixel values in the region of the discontinuity selected by the user and an average value of pixel values in a region surrounding the region of the discontinuity. In detail, the selection unit 42 selects one inspection image with the largest aforementioned ratio. The display control unit 44 performs control for highlighting the inspection image selected by the selection unit 42. Accordingly, the user can readily refer to the inspection image in which the region of the discontinuity is viewable relatively easily.

In this case, the selection unit 42 may select one inspection image from the multiple inspection images based on the degree of smoothness of pixel values in a region surrounding the discontinuity selected by the user. In detail, the selection unit 42 selects one inspection image with the highest aforementioned degree of smoothness. The display control unit 44 performs control for highlighting the inspection image selected by the selection unit 42. Accordingly, the user can readily refer to the inspection image in which the region of the discontinuity is viewable relatively easily.

As shown in Fig. 19, the display control unit 44 may change the viewpoint direction such that the discontinuity selected by the user is located at the center of and at the front side of the screen.

As shown in Fig. 20, the viewpoint direction may be changed such that the inspection target O has the smallest thickness in the viewpoint direction at the location of the discontinuity selected by the user.

In the above embodiment, the display control unit 44 does not have to perform the control for displaying the discontinuity-indicating object on the virtual inspection target O based on the discontinuity location information 36. In this case, the display control device 10 does not have to store the discontinuity location information 36.

In the above embodiment, for example, various processors indicated below can be used as the hardware structure of processing units that execute various processes, such as the reception unit 40, the selection unit 42, and the display control unit 44. In addition to a CPU as a general-purpose processor executing software (program) to function as one of various processing units, as mentioned above, the aforementioned various processors include a programmable logic device (PLD), such as a field-programmable gate array (FPGA), as a processor whose circuit configuration is changeable after being manufactured, and a dedicated electrical circuit, such as an application specific integrated circuit (ASIC), as a processor having a circuit configuration dedicatedly designed for executing a specific process.

One processing unit may be constituted of one of these various processors, or may be constituted of a combination of two or more of the processors of the same type or different types (e.g., a combination of multiple FPGAs or a combination of a CPU and an FPGA). Moreover, multiple processing units may be constituted of a single processor.

As a first example where multiple processing units are constituted of a single processor, one processor may be constituted of a combination of at least one CPU and software, and the processor functions as multiple processing units, as is represented by, for example, client and server computers. A second example is a processor that realizes the function of an entire system including multiple processing units by one integrated circuit (IC) chip, as is represented by, for example, a system-on-a-chip (SoC). Accordingly, the various processing units are constituted by using at least one of the aforementioned various processors as a hardware structure.

More specifically, electrical circuitry having a combination of circuit elements, such as semiconductor elements, can be used as the hardware structure of each of these various processors.

As an alternative to the above embodiment in which the display control program 30 is preliminarily stored (installed) in the storage unit 22, the display control program 30 may be provided by being stored in a recording medium, such as a compact disc read-only memory (CD-ROM), a digital versatile disc read-only memory (DVD-ROM), or a universal serial bus (USB). As another alternative, the display control program 30 may be downloaded from an external device via a network.

The disclosure of JP2022-101831 filed on June 24, 2022 is incorporated in this description by reference in its entirety. All documents, patent applications, and technical standards indicated in this description are incorporated in this description by reference by the same degree as when each document, patent application, and technical standard are specifically and individually indicated as being incorporated by reference.

## Claims

1. A display control device comprising at least one processor and performing display control based on a plurality of inspection images captured by radiating radiation onto an inspection target from a plurality of different image capturing directions and structure information indicating a three-dimensional structure of the inspection target,
wherein the processor is configured to perform the display control based on association information in which a viewpoint direction in a case in which the display control is performed based on the structure information and the image capturing direction of each of the plurality of inspection images are associated with each other.

2. The display control device according to claim 1, wherein:
the processor is configured to perform control for displaying at least one of the inspection images and a virtual inspection target based on the association information, the virtual inspection target being based on the structure information.

3. The display control device according to claim 2, wherein:
the processor is configured to change a display mode of the at least one of the plurality of inspection images based on the association information.

4. The display control device according to claim 3, wherein:
the processor is configured to change the display mode of the inspection image based on the viewpoint direction.

5. The display control device according to claim 4, wherein:
the processor is configured to:
select one inspection image from the plurality of inspection images based on an angle formed between the viewpoint direction and the image capturing direction (D), and
change the display mode of the selected inspection image.

6. The display control device according to claim 4, wherein:
the processor is configured to select one inspection image from the plurality of inspection images based on a similarity between a two-dimensional image and the inspection image, and changes the display mode of the selected inspection image, the two-dimensional image being obtained by projecting the structure information in the viewpoint direction.

7. The display control device according to claim 5 or 6, wherein:
the processor is configured to perform control for highlighting the selected inspection image.

8. The display control device according to claim 5 or 6, wherein:
the processor is configured to change a display position of the selected inspection image.

9. The display control device according to claim 5 or 6, wherein:
the processor is configured to perform control for displaying only the selected inspection image of the plurality of inspection images.

10. The display control device according to claim 4, wherein:
in a case in which the processor performs control for displaying the plurality of inspection images, the processor is configured to dispose each inspection image at a position according to an angle formed between the viewpoint direction and the image capturing direction of the inspection image.

11. The display control device according to claim 4, wherein:
in a case in which the processor performs control for displaying the plurality of inspection images, the processor is configured to dispose the inspection images in an order according to attribute information of each inspection image.

12. The display control device according to claim 4, wherein:
in a case in which the processor performs control for displaying the plurality of inspection images, the processor is configured to dispose the inspection images in an order according to an angle formed between the viewpoint direction and the image capturing direction of each inspection image or in an order according to a similarity between a two-dimensional image and each inspection image, the two-dimensional image being obtained by projecting the structure information in the viewpoint direction.

13. The display control device according to any one of claims 2 to 6,wherein:
the processor is configured to change a display mode of the virtual inspection target based on the image capturing direction according to a position selected within a display region of the plurality of inspection images.

14. The display control device according to claim 13, wherein:
the processor is configured to change the viewpoint direction to a direction identical to the image capturing direction of a selected one of the inspection images.

15. The display control device according to claim 13,wherein:
in accordance with an operation for moving a selected one of the inspection images, the processor is configured to change the viewpoint direction to a direction identical or opposite to the operation for moving the selected inspection image.

16. The display control device according to claim 13, wherein:
in a case in which the selected position is a position between the plurality of inspection images, the processor is configured to change the viewpoint direction such that a relative positional relationship between the selected position and the inspection images disposed in a vicinity of the selected position becomes closer to a relative positional relationship between the viewpoint direction and the inspection images disposed in the vicinity.

17. The display control device according to any one of claims 2 to 6, wherein:
the processor is configured to perform control for displaying information indicating a correspondence relationship between the structure information and the plurality of inspection images in combination with at least either the virtual inspection target or the inspection images based on the association information.

18. The display control device according to claim 17, wherein:
the processor is configured to perform control for displaying an object indicating that any of the inspection images is present in a vicinity of the virtual inspection target and in a direction corresponding to the image capturing direction of the inspection image.

19. The display control device according to claim 18, wherein:
the processor is configured to perform control for highlighting an object indicating that a selected one of the inspection images is present.

20. The display control device according to claim 17,wherein:
the processor is configured to perform control for displaying a selected one of the inspection images in combination with a lattice-like auxiliary line and performs control for displaying the virtual inspection target in combination with a lattice-like auxiliary line having a same pitch as the auxiliary line in a plane orthogonal to a direction corresponding to the image capturing direction of the selected inspection image.

21. The display control device according to claim 17, wherein:
the processor is configured to perform control for displaying a feature point in combination with a selected one of the inspection images and the virtual inspection target, the feature point corresponding to where the inspection image and the virtual inspection target correspond with each other.

22. The display control device according to claim 17,wherein:
the processor is configured to perform control for displaying an object indicating a discontinuity in combination with a location thereof on the virtual inspection target corresponding to the location of the discontinuity on a selected one of the inspection images.

23. The display control device according to any one of claims 2 to 6,wherein:
positional information of a discontinuity appearing in any of the inspection images and positional information of the discontinuity in the structure information are associated with each other, and
the processor is configured to change at least one of a display mode of the virtual inspection target or a display mode of the inspection image based on the positional information of the discontinuity selected in the inspection image or the structure information.

24. The display control device according to claim 23,wherein:
the processor (20) is configured to change the display mode of the inspection image based on a distance between a location of the discontinuity selected from a plurality of discontinuities and a location of a discontinuity other than the selected discontinuity.

25. The display control device according to claim 23, wherein:
the processor is configured to change the display mode of the inspection image based on a ratio between an average value of pixel values in a region of the selected discontinuity and an average value of pixel values in a region surrounding the region of the discontinuity.

26. The display control device according to claim 23,wherein:
the processor is configured to change the display mode of the inspection image based on a degree of smoothness of pixel values in a region surrounding the selected discontinuity.

27. The display control device according to claim 23,wherein:
the processor is configured to change the viewpoint direction such that the selected discontinuity is located at a center and at a front side of a screen.

28. The display control device according to claim 23,wherein:
the processor is configured to change the viewpoint direction such that the inspection target has a smallest thickness in the viewpoint direction at a location of the selected discontinuity.

29. A display control method executed by at least one processor of a display control device, the display control device comprising the processor and performing display control based on a plurality of inspection images captured by radiating radiation onto an inspection target from a plurality of different image capturing directions and structure information indicating a three-dimensional structure of the inspection target, the display control method comprising:
performing the display control based on association information in which a viewpoint direction in a case in which the display control is performed based on the structure information and the image capturing direction of each of the plurality of inspection images are associated with each other.

30. A display control program executed by at least one processor of a display control device, the display control device comprising the processor and performing display control based on a plurality of inspection images captured by radiating radiation onto an inspection target from a plurality of different image capturing directions and structure information indicating a three-dimensional structure of the inspection target, the display control program comprising:
performing the display control based on association information in which a viewpoint direction in a case in which the display control is performed based on the structure information and the image capturing direction of each of the plurality of inspection images are associated with each other.
